(19) Europäisches Patentamt / European Patent Office / Office européen des brevets

(11) **EP 2 245 757 B1**

(12) **EUROPEAN PATENT SPECIFICATION**

(45) Date of publication and mention of the grant of the patent:
**21.02.2018 Bulletin 2018/08**

(21) Application number: **08872222.8**

(22) Date of filing: **15.05.2008**

(51) Int Cl.:
*H04L 5/00* (2006.01)   *H04W 52/36* (2009.01)
*H04W 52/24* (2009.01)

(86) International application number:
**PCT/SE2008/050571**

(87) International publication number:
**WO 2009/099361 (13.08.2009 Gazette 2009/33)**

(54) **A METHOD AND SYSTEM FOR MITIGATING INTER-CELL INTERFERENCE**

VERFAHREN UND SYSTEM ZUR MINDERUNG VON STÖRUNGEN ZWISCHEN ZELLEN

PROCÉDÉ ET SYSTÈME DE RÉDUCTION DE BROUILLAGE INTERCELLULAIRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.02.2008 US 26224 P**

(43) Date of publication of application:
**03.11.2010 Bulletin 2010/44**

(73) Proprietor: **Telefonaktiebolaget LM Ericsson (publ)**
**164 83 Stockholm (SE)**

(72) Inventors:
• **KAZMI, Muhammad**
  **S-167 39 Bromma (SE)**
• **FODOR, Gabor**
  **S-165 52 Hässelby (SE)**
• **KOUTSIMANIS, Chrysostomos**
  **SE-169 61 Solna (SE)**

(74) Representative: **Ericsson**
**Patent Development**
**Torshamnsgatan 21-23**
**164 80 Stockholm (SE)**

(56) References cited:
**WO-A1-2007/015727     US-A1- 2006 286 995**

• **"3 rd Generation Partnership Project (3GPP); Technical Specification Group (TSG) Radio Access Network (RAN); Working Group 1 (WG1); Physical layer procedures (FDD)", 3GPP STANDARD; TS 25.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 28 June 1999 (1999-06-28), pages 1-30, XP050400162, [retrieved on 1999-06-28]**
• **KOUTSIMANIS, C: 'Inter-Cell Interference Coordination Techniques for Multi-Cell OFDMA Networks Supporting Narrow Band and Elastic Services' MASTER OF SCIENCE THESIS, ROYAL INSTITUTE OF TECHNOLOGY (KTH), [Online] May 2007, pages 1 - 85, XP003025150 Retrieved from the Internet: <URL:http://www.cos.ict.kth.se/publications /publications/2007/2630.pdf> [retrieved on 2009-01-13]**
• **GANG, D. ET AL.: 'A downlink radio resource allocation algorithm based on inter-cell interference mitigation for multi-cell OFDMA system' COMMUNICATIONS AND NETWORKING IN CHINA 25 October 2006, pages 1 - 5, XP031074739**
• **'Telecommunications Symposium, 2006 International, 3-6 Sept 2006', 03 September 2006, ISBN 9788589748049 article KIANI S.G. ET AL.: 'A simple greedy scheme for multicell capacity maximization', pages 435 - 440, XP031204058**

• **KIANI S.G. ET AL.: 'Optimal and distributed scheduling for multi-cell capacity maximization' IEEE TRANSACTIONS ON WIRELESS COMMUNICATIONS January 2008, ISSN 1536-1276 pages 288 - 297, XP011200155**

**Description**

TECHNICAL FIELD

The present invention relates in general to a method and a system for mitigating inter-cell interference and in particular to a method and a system for transmission power determination and allocation to mitigate inter-cell interference.

BACKGROUND

Orthogonal Frequency Division Multiplexing (OFDM) is a promising transmission technique for broadband wireless networks. It has already been adopted by, for instance, Digital Video Broadband - Terrestrial (DVB-T) and Asymmetrical Digital Subscriber Line (ADSL) and was recently proposed as a radio transmission scheme for 3G-Long term Evolution (LTE) cellular systems. An important feature of OFDM is the orthogonality among the subcarriers, which reduces or eliminates *intra-cell* interference. Nevertheless, *inter-cell* interference exists and may degrade the overall performance of the network. Specifically, in the downlink direction the impact of inter-cell interference may be more pronounced for cell-edge users, due to the relatively low channel gains to their respective serving base stations and due to the proximity of neighbour base stations.

The problem of resource allocation in the downlink direction of multi-cell OFDM networks has been extensively studied. Early studies on Radio Resource Management (RRM) by Su and Geraniotis, 1998 (H. J. Su and E. Geraniotis, "A Distributed Power Allocation Algorithm with Adaptive Modulation for Multi-Cell OFDM Systems," in IEEE International Symposium on Spread Spectrum Techniques and Applications, 1998) and Kiani et al., 2006 (S. Kiani, D. Gesbert, J. E. Kirkebø, A. Gjendemsjø and G. E. Øien, "A Simple Greedy Scheme for Multicell Capacity Maximization," in International Telecommunications Symposium, 2006) reduced the complexity of the resource allocation problem by assuming a single user per cell. In these studies the subcarrier assignment problem becomes effectively equivalent with the power allocation problem since the user has access to the whole bandwidth and thereby the complexity of the problem is greatly reduced.

These studies follow similar processes in the sense that they formulate a total rate maximization problem subject to power constraints. In order to solve this problem they propose distributed offline heuristic algorithms, which perform power allocation based on the well known water-filling algorithm.

The problem of power allocation in a multi-cell environment is a non-convex problem that has not been solved optimally in a distributed way in polynomial time.

Moreover the convergence speed of the distributed algorithms in Su and Geranoitis, 1998; and Kiani et al., 2006 is relatively low. The convergence of such algorithms would be even more challenging in systems like LTE, which primarily rely on fast packet scheduling and access to the total available spectrum is facilitated with a fine granularity through the dynamic allocation of frequency channels.

In Li and Liu, (G. Li and H. Liu, "Downlink radio resource allocation for multi-cell OFDMA system" in IEEE Transactions on wireless communications, vol. 5, No. 12, Dec. 2006), a radio resource allocation system is presented wherein the power to be allocated is determined as a flat power being the total transmission power of the base divided by the total number of resource blocks. Herein, a power is allocated without taking into account inter-cell interference and the focus is on determining the assignment of frequency channels to users.

US 2006/286995 describes slow uplink power control of user equipment, by responding to a long term control metric that is derived from an uplink channel metric.

3rd Generation Partnership Project (3GPP); Technical Specification Group (TSG) Radio Access Network (RAN); Working Group 1 (WG1); Physical layer procedures (FDD), TS 25.214, no. V1.1.0, 28 June 1999 (1999-06-28}, pages 1-30, XP050400162, [retrieved on 1999-06-28] describes a downlink transmit power control procedure which controls simultaneously the power of a DPCCH and its corresponding DPDCHs.

KOUTSIMANIS, C: "Inter-Cell Interference Coordination Techniques for Multi-Cell OFDMA Networks Supporting Narrow Band and Elastic Services", MASTER OF SCIENCE THESIS, ROYAL INSTITUTE OF TECHNOLOGY (KTH), May 2007 (2007-05), pages 1-85, XP003025150, describes an inter-cell scheduler which coordinates the allocation decisions of the RNC in the time domain.

There is hence a need for a method and a system of power and channel allocation that diminishes and/or eludes at least some of the problems as mentioned above.

It should be emphasized that the term "comprises/comprising" when being used in the specification is taken to specify the presence of the stated features, integers, steps or components but does not preclude the presence or addition of one or more other features, integers, steps or components or groups thereof.

SUMMARY

An object of the present invention may be to provide near optimized channel and transmission power allocation mitigating inter-cell interference.

According to one aspect there is provided a method for determining a transmission power level for transmission power allocation in a communication system, comprising the steps of:

- obtaining channel gain data related to at least a first user equipment and its serving first base station,
- obtaining performance related data related to at least the first user equipment,
- adapting of a transmission power level per group of resource blocks for at least the serving first base station for transmission related to the at least first user equipment, for increasing a calculated data bit throughput of the communication system, dependent on the obtained channel gain data and the obtained performance related data, and
- providing the transmission power level per group of resource blocks for power allocation as an upper limit of the at least serving first base station transmission power on the super frame level,

wherein the super frame level comprises a level for at least one frame, and wherein the group of resource blocks comprises at least one resource block.

Said step of adapting of a transmission power level may further comprise reallocating power that is associated with resource blocks that are not used by the serving first base station at the time of power determination to at least one group of resource blocks that is used by the serving first base station at the time of power determination, in the case the calculated throughput of system increases with an increased allocated power.

The performance related data in the step of obtaining performance related data may comprise one or more of the following: buffer status at the base station (BS) for the at least first user equipment, type of services related to the at least first user equipment at the time of power determination, throughput data for the at least first user equipment during a past super frame, channel quality indicator (CQI) input data, and channel state information (CSI) input data.

According to another aspect, there is provided a method for processing of transmission power level related data in a base station, related to a communications system, comprising the steps of:

- obtaining channel gain data from at least a served first user equipment (UE),
- providing performance related data for at least the served first user equipment,
- obtaining determined transmission power level data per group of resource blocks, as determined at a super frame level,
- providing transmission power related pilot signals to at least the served first user equipment,
- obtaining channel quality related information from at least the served first user equipment, and
- adapting of the transmission power level per resource block on the frame level, comprising altering the determined transmission power level as determined per group of resource blocks at the super frame level, in dependence of the obtained channel quality related information related to at least the served first user equipment and the obtained channel gain data.

The channel quality related information in the step of obtaining channel quality related information may further comprise a signal to interference and noise ratio target.

The step of altering the determined transmission power level per resource block on the frame level may further comprise decreasing the transmission power level as determined on the super frame level, in dependence of the obtained signal to interference and noise ratio target and the obtained channel gain data, related to at least the served first user equipment.

The step of altering the determined transmission power level per resource block on the frame level may further comprise increasing the transmission power level on a frame level from the level as determined on a super frame level, in dependence of the obtained signal to interference and noise ratio target, whereas maintaining the average transmission power level over all resource blocks used by the served base station equal or below the average transmission power level over all resource blocks as determined on the super frame level.

The channel gain data in the step of obtaining channel gain data may comprise average data over fast fading channel gains.

The method for processing transmission power allocation related data may further comprise calculating average data over fast fading channel gains from the obtained channel gain data.

The channel quality information in the step of obtaining channel quality information, may comprise substantially instantaneous channel quality related information.

The method for processing transmission power allocation related data may further comprise providing pilot signals to at least the served first user equipment.

According to yet another aspect, there is provided a user equipment for providing channel gain data by a user equipment related to transmission power allocation in a communications system, comprising the steps of:

- providing channel gain data for the base station serving said user equipment,
- obtaining pilot signal information, comprising a transmission power level related information as determined per group of resource blocks on a super frame level, and
- providing channel quality related information, based on the obtained pilot signal information.

The channel gain data in the step of providing channel gain data may further comprise average data over fast fading channel gains.

The channel quality related information in the step of providing channel quality related information may comprise substantially instantaneous channel quality related information.

The method for providing channel gain data may further comprise obtaining regular pilot signal information, and wherein providing channel gain data for a base station may be based on the obtained first pilot signal information.

According to yet another aspect, there is provided a radio network controller, arranged to obtain channel gain data related to at least a first user equipment and its serving first base station, obtain performance related data related to at least the first user equipment, adapt a transmission power level per group of resource blocks for at least the serving first base station for transmission related to the at least first user equipment, for increasing a calculated data bit throughput of the communication system, dependent on the obtained channel gain data and the obtained performance related data, and provide the transmission power level per group of resource blocks for power allocation as an upper limit of the at least serving first base station transmission power on the super frame level, wherein the super frame level comprises a level for at least one frame, and wherein the group of resource blocks comprises at least one resource block.

The radio network controller may further comprise a regulator unit that is arranged to determine a number of resource blocks per user equipment, and may further comprise a power determination unit arranged to determine a long-term power allocation level on a super-frame level per group or resource blocks, wherein the group of resource blocks comprises at least one resource block and the super frame comprises at least one frame.

According to yet another aspect, there is provided a base station unit for a radio communication system, arranged to obtain channel gain data from at least a served first user equipment (UE), provide performance related data for at least the served first user equipment, obtain determined transmission power level data per group of resource blocks, as determined at a super frame level, provide transmission power related pilot signals to at least the served first user equipment, obtain channel quality related information from at least the served first user equipment, and adapt the transmission power level per resource block on the frame level, comprising altering the determined transmission power level as determined per group of resource blocks at the super frame level, in dependence of the obtained channel quality related information related to at least the served first user equipment and the obtained channel gain data.

The base station unit may further comprise a gain control unit arranged to provide gain data related to at least a first user equipment, and may comprise a power allocation unit arranged to allocate transmission power for communication with at least the first user equipment, based on a transmission power level.

The transmission power level within the base station may further comprise at least a long-term transmission power level determined on a super-frame level.

The transmission power level within the base station may further comprise a short-term transmission power level determined on a frame level.

According to yet still another aspect, there is provided a user equipment for a radio communication system, arranged to provide channel gain data for the base station serving said user equipment, obtain pilot signal information, comprising a transmission power level related information as determined per group of resource blocks on a super frame level, and provide channel quality related information, based on the obtained pilot signal information.

The user equipment may further comprise a gain unit arranged to provide gain data to the base station serving the user equipment, and may comprise a radio channel unit arranged to provide channel quality related data to said base station.

The user equipment may further comprise a mobile phone.

The term resource block (RB) used in the present invention stands for a physical time-frequency resource in OFDM access (OFDMA). Typically more than one resource block is allocated for data transmission. In evolved universal Terrestrial Radio Access Network (E-UTRAN) one resource block comprises 12 sub-carriers each having 15 kHz carrier spacing over 0.5 ms, i.e. 1 RB = 180 kHz x 0.5 ms.

In OFDMA as well as in E-UTRAN each frame is typically 10 ms long in time.

It should be emphasized that the term "comprises/comprising" when being used in the specification is taken to specify the presence of the stated features, integers, steps or components but does not preclude the presence or addition of one or more other features, integers, steps or components or groups thereof.

BRIEF DESCRIPTION OF THE DRAWINGS

In order to explain advantages and features herein in more detail a few embodiments will be described below, where references are made to the accompanying drawings, for which

> figure 1 illustrates a message sequence diagram according to the prior art;
> figure 2 presents method steps illustrating features of power allocation according to some embodiments;
> figures 3-5 illustrate various aspects of resource allocation;
> figure 6 illustrates a communication system according to some embodiments; and
> figure 7 illustrates a message sequence diagram according to at least some embodiments.

DETAILED DESCRIPTION

The algorithms of the prior art documents, as mentioned above, are localized and hence a new estimation of the interference is needed every time a BS tries to allocate power to its own subcarriers. Consequently, this may lead to an increase in the number of pilot signals transmissions.

Moreover, a fully centralized algorithm which coordinates power allocation over the whole cellular system is not feasible from a computational, delay and signalling overhead perspectives, according to Koutsopoulos and Tassiulas; 2006.

In addition, the existing prior art does not take into account explicit, by way of minimum, peak or average, rate requirements for admitted sessions.

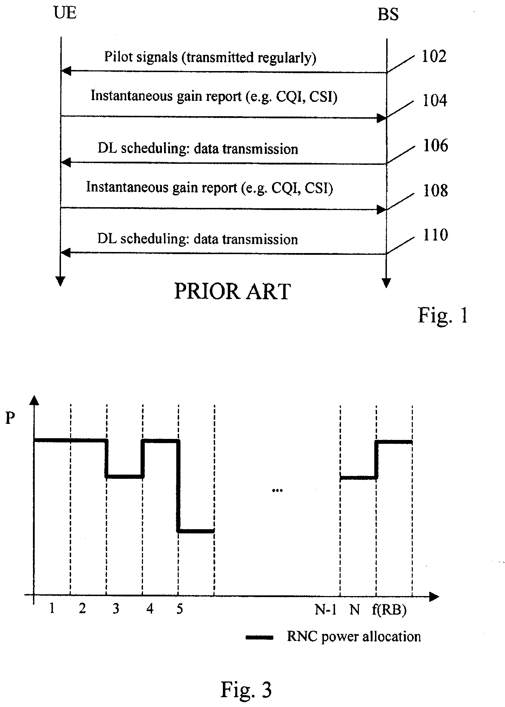

Figure 1 shows a message sequence diagram of a prior art system. At the beginning of each frame, the BSs may transmit pilot signals step 102, which can be used by the UEs in order to estimate an instantaneous channel profile, for example channel quality indicator (CQI) or channel state information (CSI). These measurements can be reported back, step104, to the serving BS, which performs scheduling and power allocation without considering inter-cell interference. Each BS may then transmit data along with pilot signals to its served users, step106. These new pilot signals can now be used for the estimation of the channel gains of the next frame, step 108, which could then be used for further downlink scheduling and power allocation, step 110.

Signalling is thus taken place between the UEs and the serving BSs only, as well as on a single timescale.

The underlying idea of at least some embodiments according to the present invention is to allocate power using a dynamic scheme, where power allocation may occur in two timescales.

At the first level, having a slower time scale, in the order of seconds, power allocation may be performed using a network-wide knowledge of the long-term channel gains, or long-term radio conditions of the users, and the long term user performance criteria and status, for example achieved user throughput, buffer size, bit rate requirement etc. The width of this level, which will be referred to as the *super-frame* level, is to handle inter-cell interference and to obtain a close to optimum network-wide power allocation.

The second level, which is performed at a faster time scale, in the order of milliseconds, power allocation may be performed locally at each BS using the constraints on power levels imposed by the super-frame level as well as on the instantaneous channel gains or short-term radio conditions of the users. The width of this level, which will be referred to as the *frame* level, is to exploit multipath propagation and fast fading.

In addition, the power allocation scheme according to some embodiments may take into account rate requirements, corresponding to a number of resource blocks RB per user, assuring fair allocation, with respect to their defined rate requirements, of the resources among users.

In the following a detailed example according to at least some embodiments is presented.

Considering an Orthogonal Frequency Division Multiplexing Access (OFDMA) system with $L$ Base Stations (BSs), which are deployed in a hexagonal grid and each BS is positioned in the middle of each cell. Let $L$ denote this set of BSs and $M_l$ the set of users connected to BS $l$. The number of users in the $l^{th}$ BS is thus $M_l$ and the entire network

$$M = \sum_{l=1}^{L} M_l$$

has in total        users.

Radio resources may be partitioned in both the frequency domain and the time domain. The total available bandwidth may be divided into N sub-bands, where each sub-band is a cluster of k consecutive OFDM subcarriers.

In addition, the time resource may be divided into frames, while a number of consecutive frames construct a super-frame. The smallest resource unit that can transport data is a combination of one frequency resource unit (sub-band) and one time resource unit (frame). This basic resource unit corresponds to one Resource Block (RB).

According to at least some ascpects, the Radio Resource Control (RRC) that is responsible for resource allocation may be realized at both a Radio Network Controller (RNC) and base stations (BSs). This semi-distributed RRC scheme may reduce the computational load by splitting the decisions in two levels, a RNC level and a BS-level. The RNC algorithm may be executed at a slower time scale and may allocate resources on a super-frame level based on the long-term channel profile as well as on the long-term achieved performance of each user. The width of the RNC entity may be to control the interference among its BSs and maximize the interference avoidance gain.

The BS algorithm, however, may be executed at a faster time scale and may allocate resources on a frame level based on the instantaneous channel profile of each user as well as on the decisions and/or restrictions of the RNC algorithm.

According to some aspects the RNC refers to a centralized logical node. According to some further aspects the RNC can also be realized in a distributed system provided the base stations can communicate with each other. In such systems, one of the base stations could be configured to act as a centralized server, which would collect the necessary super-frame information from the base stations and re-distribute it to the desired set of base stations for using it for localized resource allocation.

In the following a description of system operation during one super-frame cycle, is presented. At this time scale, corresponding to one super-frame, long-term power allocation may be performed, which in turn may be used as an input to individual base stations for their respective distributed power allocation. This is described further below.

**Centralize or RNC based iterative power and channel allocation: the longer time scale**

One super-frame corresponds to the acting period of the RNC decisions and it typically lasts several scheduling instances, being referred to as transmission time intervals, (TTIs). Each BS transmits reference or pilot signals for enabling the User Equipment (UE) to perform downlink measurements and measurement reporting, facilitating channel estimations. Specifically, based on the received signals each UE may calculate the long-term channel gains or any relevant long-term downlink measurement, which may average out fast fading. Each UE then reports these measurements to the RNC if it exists as a physical node. Otherwise in a distributed architecture, each UE reports these measurements to the serving BS, which distributes this information to the other BSs of the cluster, for example through the standardized X2 interface in LTE.

By using these measurements the RNC, either represented by a logical node or a physical node, may construct the average gain matrix **G** of the network, where UEs lie in the first dimension and BSs in the second one. Here, the dimension of **G** matrix is *M-by-L.* Based on matrix *G*, the Shannon limit capacity of a RB *n* when used by a user *i* can be calculated form the following formula:

$$T_{in}(\mathbf{P}) = B_{RB} \cdot \log_2 \left( 1 + \frac{P_{\hat{i}n} \cdot G_{i\hat{i}}}{\sigma^2_{RB} + \sum\limits_{\substack{j=1 \\ j \neq \hat{i}}} P_{jn} \cdot G_{ij}} \right)$$

wherein $B_{RB}$ is the bandwidth of a RB, $G_{ij}$ is the long-term gain between BS *j* and user *i*, $G_{i\hat{i}}$ is the long term gain between user *i* and its serving BS $\hat{i}$, $P_{in}$ is the transmission power of the useful signal at RB *n*, $P_{jn}$ is the transmission power of the interfering signal from the *j*th base station at RB *n* and $\sigma^2_{RB}$ is the variance of the additive white Gaussian noise (AWGN) with zero mean value.

The objective of the RNC may thus be to maximize the overall throughput of the system by allocating power to RBs. This is termed centralized power allocation or allocation by RNC, being either logical or physical. Specifically, the optimization problem can be formulated as follows:

$$\underset{\mathbf{P}}{Max} \sum_{i=1}^{M} \sum_{n=1}^{N} T_{in}(\mathbf{P}) \qquad (\text{P.1})$$

subject to:

$$\sum_{n=1}^{N} \sum_{m \in M_l} P_{mn} \leq P_{tot}, \ l = 1,...,\text{L} \qquad (\text{C.1.1})$$

$$P_{mn} \geq 0, \; m = 1,...,\mathrm{M}; \; n = 1,...,\mathrm{N} \qquad\qquad (C.1.2)$$

$$R_{i,\min} \leq \sum_{n=1}^{N} T_{in} \leq R_{i,\max}, \; i = 1,...,\mathrm{M} \qquad\qquad (C.1.3)$$

Algorithm description

The optimization problem characterized by (P.1) is in general difficult to be solved due to its non-convex characteristics. In order to solve it, it is proposed an iterative heuristic algorithm. The algorithm comprises two parts:

In the first part, the algorithm may allocate RBs to the users based on users' current bit rate requirement and on the assumption of equal power distribution among RBs. The first parameter, the users' current bit rate/performance requirement may in turn be derived at the RNC by two main sets of parameters, user service type/requirement and its achieved performance (i.e. in the last super-frame). This is further elaborated down below.

Since different users could have different performance, the first iterative step may not necessarily allocate the same number of RBs to all users. In practical situation it is also likely that some of the RBs remain unused in at least some base stations. This property is exploited in the second iterative step.

In the second part, the algorithm attempts to maximize further the system throughput by allocating any excessive power, which is residual from the first part due to unused RBs, to already assigned RBs.

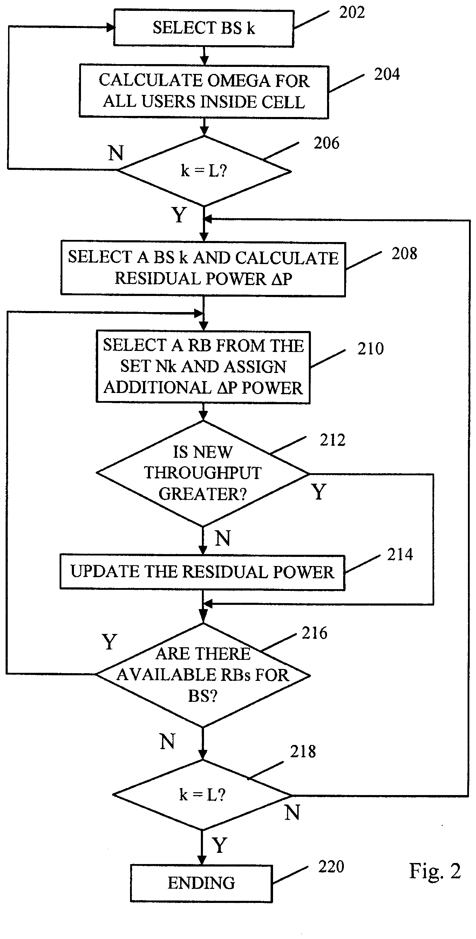

With reference to figure 2, presenting a flow-chart overview of steps of a radio network control related allocation algorithm is described. The method may start with selecting a first BS in step 202, here BS $k$. Thereafter, the throughput contribution to the system of each UE $m$ when being allocated RB $n$, is calculated for all UEs. In the following step, step 206 it is determined whether the $k$ is the last BS, that is BS $L$, or not. If it is determined that the index k does not equal index L, another BS may be selected with incremented index, in step 202. If it is on the other hand determined that $k$ equals $L$ in step 206, the following step is selecting a BS $k$ and calculate the residual power $\Delta$P, in step 208. The residual power is the power that is associated with a resource block that is not used by the current BS $k$. Therefore, this power may be used elsewhere.

The next step is selecting a RB from the set of $Nk$, that is the set of RBs that are used by the kth BS, and allocate additional power $\Delta$P. A determination as to whether the throughput is increased or not, with additional power, is then performed in step 212.

In the case the throughput is not increased in step 212, the next is step 214, updating the residual power in step 214. If it is determined in step 212 that the throughput is increased the following is step 216, determining whether hare are any available RBs for BS, or not, in step 216. If it is determined that are more RBs available in step 216, the next step is step 210, selecting a RB from the set of $Nk$ etc. If it is determined in step 216 that there are no available RBs for BS it is determined whether $k$ equals $L$ or not. In the case k does not equal $L$, the following step is to select a BS k and to calculate residual power, in step 208.

However, if it is determined that $k$ equals $L$ in step 218, the method is ended in step 220. Residual power may thus be allocated to RBs that are used by the BS $k$.

In the following, the pseudo code of the RNC allocation algorithm is given.

Table 1. Pseudo code variables of the RNC allocation algorithm.

| Variable | Meaning |
|---|---|
| L | Number of BSs controlled by the RNC |
| M | Total number of users in the system |
| N | Total number of available RBs |
| $M_k$ | Number of users connected to the $k^{th}$ BS |
| $T_{bef}(m,n)$ | Total throughput of the system before allocating RB n to user m |
| $T_{aft}(m,n)$ | Total throughput of the system after allocating RB n to user m |
| $\Omega(m,n)$ | Throughput contribution to the system of user m when is allocated RB n |
| **X** | L-by-N index matrix which defines the RB allocation among BSs |

(continued)

| Variable | Meaning |
|---|---|
| **Y** | M-by-N index matrix which defines the RB allocation among users |
| **P** | M-by-N long-term power allocation matrix |
| $e_k^L$ | A vector with length L where its elements are all zero except the kth element |
| $N_k$ | Set of RBs used by the kth BS |
| $\tilde{N}_k$ | Set of RBs of BS k that do not take part in the power redistribution procedure |

**Initialization: X**=zeros(L, N); **Y**=zeros(M, N);

**For** $k$ = 1 : L **do**                    % *Base station loop*
$\quad$ **y**$_{Mtx1}$ = $[0, 0,\ldots, 0]^{T}$;
$\quad$ **x**$_{Lx1}$ = $[0, 0,\ldots, 0]^{T}$;
$\quad$ **T**$_{bef}$ = zeros(M$_k$, N);
$\quad$ **T**$_{aft}$ = zeros(M$_k$, N);
$\quad$ **Ω** = [];
$\quad$ **For** $m \in M_k$ **do**          % *User loop*
$\quad\quad$ **For** $n$ = 1 : N **do**         % *RB loop*
$\quad\quad\quad$ **x** = **X**(1 : L, $n$);
$\quad\quad\quad$ **y** = **Y**(1 : M$_t$, $n$);
$\quad\quad\quad$ **T**$_{bef}$($m,n$) = T$_n$(**y**)
$\quad\quad\quad$ **x** = **x** + $e_k^L$ ;
$\quad\quad\quad$ **y** = **y** + $e_m^M$ ;
$\quad\quad\quad$ **T**$_{aft}$($m,n$) = T$_n$(**y**);
$\quad\quad$ **End For**
$\quad$ **End For**
$\quad$ **Ω** = **T**$_{aft}$ − **T**$_{bef}$ ;

$$(X(k,1:N),Y(m \in M_k,1:N)) \leftarrow \arg \max_z \sum_{i=1}^{M_k} \sum_{j=1}^{N} z_{ij}\Omega_{ij}$$

$$subject\ to:\ 1) \sum_{i=1}^{M_k} z_{ij} \le 1,\ \forall\, j$$

$$2)\, n_{i,\min} \le \sum_{j=1}^{N} z_{ij} \le n_{i,\max},\ \forall\, i$$

$$3)\, z_{ij} \in \{0,1\}$$

**End For**

$$\mathbf{P} = \frac{P_{tot}}{N}\cdot \mathbf{Y}\ ;\quad \% \textit{ Initialization of the power matrix}$$

**For** $k$ = 1 : L **do**

$\quad$ **IF** $\displaystyle\sum_{j\in N_k} x_{kj} < N$   % *Power redistribution*

$$\Delta P = \frac{P_{tot} - \left(\dfrac{P_{tot}}{N}\cdot\left(\displaystyle\sum_{j\in N_k} x_{kj}\right)\right)}{\displaystyle\sum_{j\in N_k} x_{kj}};$$

$\quad$ **For** n $\in N_k$
$\quad\quad$ **IF** $T_n(P(k,n) = P(k,n)+\Delta P) > T_n(P(k,n))$
$\quad\quad\quad$ $P(k,n) = P(k,n)+\Delta P$;

**ELSE**

$$\widetilde{N}_k = \widetilde{N}_k \cup n \, ;$$

$$\Delta P = \frac{P_{tot} - \left( \left[ \frac{P_{tot}}{N} \cdot \left( \sum_{\substack{j \in N_k \\ j \notin \widetilde{N}_k}} x_{kj} \right) \right] \right)}{\sum_{\substack{j \in N_k \\ j \notin \widetilde{N}_k}} x_{kj}} \, ;$$

**End IF**
**End For**
**Else**
　Continue;
**End IF**
**End For**

Resource allocation priority order

The impact of the order with which the BSs are evaluated may be important for the final outcome. The reason being that the first examined BSs have interference free RBs and hence have an advantage in allocating RBs. Based on this observation, this problem can be addressed by changing at each super-frame the order of BSs evaluation. The order can be random. In that case the BS resource allocation priority order is determined by their respective probabilities:

$[\rho_1, \rho_2, ..., \rho_N]$, where $\quad \sum_{i=1}^{N} \rho_i = 1.$ According to at least one example, all BSs have the same resource allocation priority order probability, i.e.

$$\rho_i = \frac{1}{N} \, ; \forall i \, ,$$

According to some other examples, the allocation priority may be based on the load at the BS. For example heavily loaded BSs have a preference to be served first or BSs which were not able to transmit sufficient data during past super-frames are now given the priority to be evaluated first.

According to yet other examples, the allocation may be started at BSs in a round robin fashion.

Optimality conditions of algorithm

By using the solution of the above described optimization problem, RNC may allocate power to RBs and achieve a close to optimum solution. However, this solution is valid only when accounting *average,* rather than instantaneous, channel gains. The output of the RNC algorithm is the matrix *P,* which indicates the power allocation at each RB and therefore the RB assignment to each user in case of zero power allocation on a specific RB.

An example of output from the RNC power allocation over RBs for a specific BS is illustrated in figure 3 exemplifying centralized or RNC level power allocation. As mentioned above, the specific power allocation has a global optimum only when accounting average channel gains. In other words, if BSs follow strictly the recommendations of the RNC, then the RNC power allocation may not anymore be optimum since it does not consider the fluctuations of the channel gains due to multipath propagation. However, the knowledge of the instantaneous radio conditions may be available at the BSs, through CQI reports at the TTI level. Therefore BSs may increase further the system throughput by exploiting fast fading, while at the same time having to take into account the decisions of the RNC algorithm.

Each BS may only be allocated half of the total power or no power at all on resource blocks that their neighbouring base stations use for user equipments that are located at or near their cell edge, close to the interfering base station. This further causes a low inter-cell interference.

Radio measurements for centralized allocation

As stated above the centralized power allocation may be based on two sets of measurements, one being radio related, that is long term radio conditions that should filter out the effect of fast fading. Therefore, in principle the required measurements for the centralized power allocation could also be done in the uplink directions among the UEs and the BSs.

Nevertheless, downlink measurements are preferred due to different uplink and downlink antenna configurations as well as due to support of Time Division Duplex (TDD) mode in the specifications of Long Term Evolution (LTE) systems. In addition, the UE may already report the downlink measurements based on long term averaging to the serving BS for the purpose of handovers. Thus, the measurements needed for deriving the centralized power levels for each UE can be easily obtained.

**Distributed or BS based power allocation: shorter time scale**

After solving the optimization problem as described above (P.1), RNC may distribute its decisions, that is basically the *P* matrix, to the cluster of BSs that it controls. These decisions are valid for the whole duration of the current super-frame and they may be updated at the beginning of the next super-frame when RNC algorithm will be again executed.

Hence, for the current super-frame, each BS knows which RBs, are allowed to use and in addition knows exactly the sets of RBs that the other BSs will use. In other words, after the execution of the RNC algorithm, the interference may be determined for the whole super-frame period. Now, the objective of each BS is to improve further the system throughput based on the RNC decisions and user's instantaneous channel profile, for example Channel Quality Indicator (CQI).

At the BS level there are two strategies that can be adopted in order to improve further the throughput of the system. These strategies are based on the maximum power limit that may be set on each resource block during each TTI of the super-frame by the RNC.

According to state of the art systems the maximum power limit is generally a fixed parameter specific to each service type, for instance maximum 1 Watt for speech users, 2 Watts for packet data rate services of type 1, 3 watts for packet data rate services of type 2 and so on.

This way of setting the max power limit according to the state of the art does not take into account the impact of interference in the neighbor cells.

Strict power constraint strategy

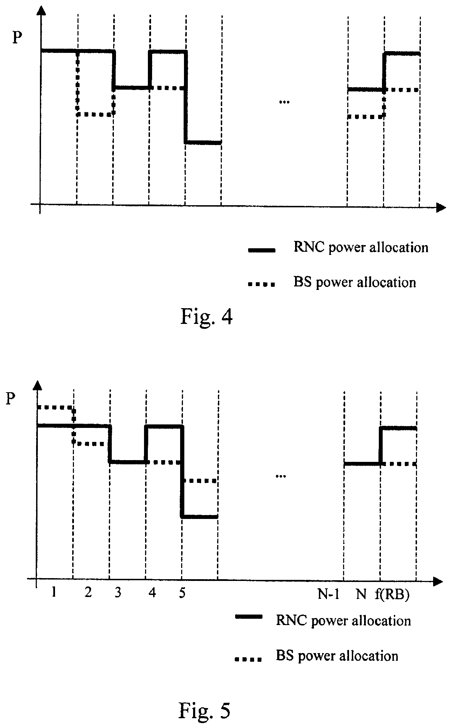

Using this strategy, each BS is prohibited to allocate more power on a RB than the one determined by the RNC, according to at least some aspects; see figure 4 showing distributed power allocation based on strict maximum power limit.

Based on the SINR target of each mobile and on the instantaneous channel gains, or CQI, the BS allocates the final transmit power which is upper limited by the power allocated by the RNC. In the case of favoured channel gain with the serving BS and/or low channel gains with the interfering BSs, the BS can allocate a smaller amount of power on the specific RB, hence producing less interference in the system.

In other words, a strict or deterministic power level is provided to the base station by the centralized power allocation node. Thus, the BS is never allowed to exceed this limit. This is a conservative approach from the throughput perspective. However, it ensures that interference in the neighbour cells is minimized.

Flexible power constraint strategy

Using this strategy, and referring to figure 5 showing distributed power allocation based on flexible maximum power limit, each BS has the freedom to allocate more power to a specific RB, under the constraint that on the average the total power allocation must not exceed the limit set by the RNC allocation. With this strategy, the allocation at the BS level is more flexible, since the BS has the ability to increase further the amount of power in order to meet the SINR threshold on a specific RB. Nevertheless, the BSs have to keep track of the excessive power allocations and try to absorb them in consequent RBs power allocation.

According to at least some aspects, moving average should be used as it would make it easier for the BS to fulfill the desired constraint imposed by the RNC towards the end of the super frame. Other averaging techniques or metrics (e.g. percentile) could also be used by the base station that could satisfy the RNC restriction in terms of power allocation on super-frame level.

The flexible power constraint strategy may be more aggressive and may allow the base station to better exploit opportunistic scheduling schemes.

**Overview of a communication system**

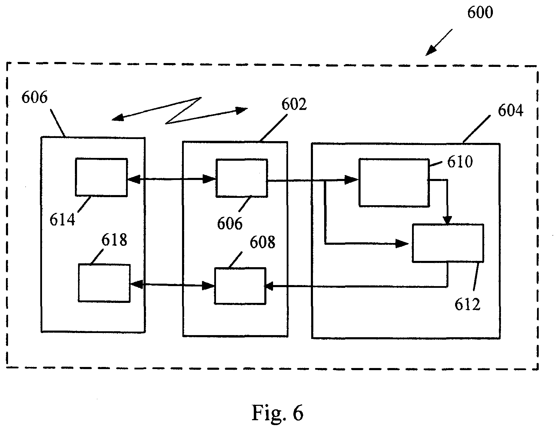

In figure 6 an overview of a communication system 600 for resource allocation according to some embodiments is presented. Said system may comprises a base station 602 for distributed transmission power allocation, a radio network controller 604 for distributed transmission power determination, and at least one use equipment 606.

The radio network controller 604 may comprise a regulator function 610, which is connected to a power determination unit 612. The base station 602 may comprise a gain unit control 606 and a power allocation unit 608, whereas the user equipment 606 may comprise a gain unit 614 as well as a radio channel unit 616.

These units and their functions may be comprised in other units having a multiple functions. Figure 6 presents a system overview according to some embodiments only. In figure 6, the average gain matrix G may be provided from the gain unit control 606 of the base station 602 to the power determination unit 612. From the gain unit control 606 of the base station 602, the matrix $Q$ showing the length of each user's buffer, that is the queue length or buffer state, may be provided to the regulator function 610 of the radio network controller 604. $T_{previous}$ being the achieved throughput per user for the foregoing super-frame, in other words how many bits each user has received during the last super-frame, may also be provided by the bas station 602 to the regulator 610. The type of service $S$ per user, being either best effort, guaranteed bit rate, applicable for Narrowband, or elastic, may similarly be provided by the base station 602, to the regulator function 610 of the radio network controller 604.

$T_{req}$ being the required throughput per user in order to satisfy its quality of service (QoS) constraints, which can be in the form of actual bit rate or number of RBs per user, may be provided by the regulator function 610 to the power determination unit 612. The transmission power level matrix $P$ for long-term power allocation may be provided by the power determination unit 612 to the power allocation unit 608 of the base station 602.

The regulator 610 may be an embedded function in the radio network controller entity which aims on regulating/deciding the number of resource blocks (RBs) per user (or the bit rate for the upcoming super-frame period) in order to keep users of the UEs satisfied in terms of their QoS requirements.

The resource block decisions may be based on the queue length, the achievable throughput during the foregoing super-frame period and the service type. Based on these measurements the regulator 610 may estimate the required throughput per user (or number of RBs) for the upcoming super-frame.

In addition, instantaneous gain data or an average gain report may be provided by the gain unit 614 of the user equipment 606.

According to at least some examples of the present invention the user equipment may comprise a mobile phone. The user equipment may alternatively also comprise a personal computer or a personal digital assistant device.

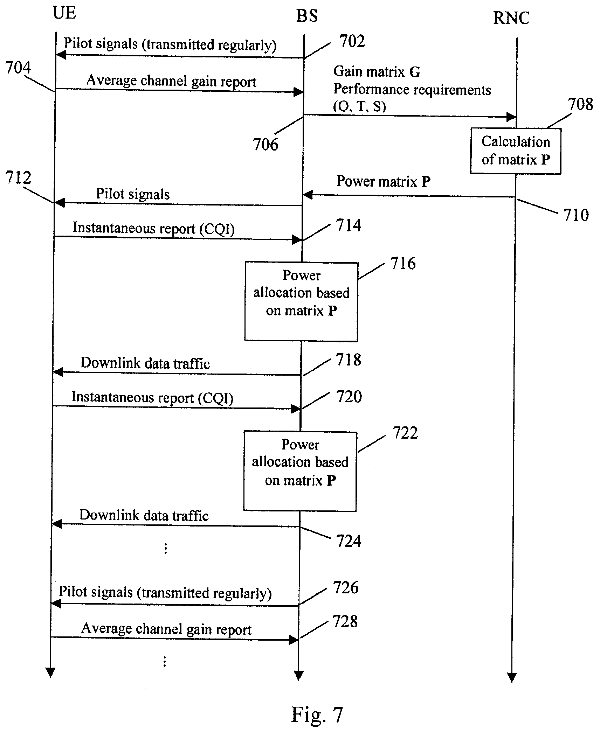

The radio channel unit 618 may receive the downlink data traffic comprising pilot signals from the power allocation unit 608 of the base station 602. Also, instantaneous report such as channel quality indicators may be provided by the radio channel unit 618 of the UE to the power allocation unit 608 of the base station 602, while taking a quick look at figure 7 presenting a signaling scheme according to some embodiments of the present invention, which is presented in more detail down below.

**Message sequence diagram according to some embodiments**

Referring to figure 7, showing a message sequence diagram according to at least some embodiments.

In addition to messages exchanged between UEs and BSs, new messages are established between the BSs and the RNC, according to some embodiments of the present invention. At the beginning of a super-frame, BSs transmit pilot signals, step 702, which are then used by each UE to estimate the average over fast fading channel gains, between itself and the rest BSs of the cluster controlled by the RNC. The average over fast fading channel gains is commonly termed long term average as it filters out the effect of fast fading or small scale fading.

The average channel gain estimations may then be reported back, step 704, to the connected BS. Next, each BS may report these gain values, step 706, which basically correspond to the rows of the aforementioned *G* matrix, as well as the performance requirements of each user to the RNC. Now, RNC is able to construct the gain matrix *G* and can then calculate a close to optimum power level, step 708, which when allocated would achieve a close to optimal long-term data bit throughput of the system. The resulted *P* matrix is then distributed to all BSs, step 710. Each BS transmits pilot signals over the allowed set of RBs, step 712, as it was defined by the RNC. These signals are used for the estimation of the instantaneous channel gains by the UEs, which are then reported to their serving base stations, step 714. Based on these measurements as well as on the power allocation matrix *P,* each BS performs scheduling and power allocation, step 716, over the allowed set of RBs according to the strategies presented in the previous section. Thereafter, data along with new pilot signals can the transmitted to the UEs using the allocated power, step 718.

The received pilot signals are then used for the estimation of the instantaneous channel gains by the UEs, which again are reported as channel quality indicators (CQI) for instance, to their serving base stations in step 720. Again, based on these measurements as well as on the power allocation matrix *P,* each BS performs a novel scheduling and power allocation, step 722, over the allowed set of RBs according to the strategies as mentioned above. Now, data along with updated pilot signals can the transmitted to the UEs using the allocated power, step 724.

This way of sending downlink traffic along with pilot signals and receiving instantaneous reports are continued on the frame level, step 726. When the current super-frame is coming to its end, an average gain report may be transmitted, step 728, from the UE to the service BS, as input data for an updated transmission power level determination on the super-frame level, whereafter the steps as described above may be scheduled, such as steps 706 and onwards.

**Applicability to uplink channel and power allocation**

The description in the preceding sections considers only downlink scenario. However, the invention is also applicable for mitigating inter-cell interference in the uplink. Similarly to downlink, for uplink scenario the RNC will carry out the long term uplink power and channel allocation (uplink resource block) by using the same parameters and principles described in the preceding sections. The short term uplink resource allocation is also done at the base station, which would therefore use methodologies similar to those described above. The current LTE system design allows the possibility to perform channel dependent scheduling also in the uplink. This is due to the fact that UE could be configured to send uplink reference signals, so called sounding reference signals, at least sparsely over the entire band. Thus every time, during a super-frame, the UE is scheduled by the base station is also informed about maximum allowed uplink power limit per RB. This will ensure that the long term conditions set by the RNC are fulfilled and will eventually minimize the uplink inter-cell interference.

It should be understood that the presented embodiments of the present invention are only a few examples of the variety of embodiments that are comprised within the present invention.

It is emphasized that the present invention can be varied in many ways, of which the alternative embodiments as presented are just a few examples. These different embodiments are hence non-limiting examples.

The radio network controller may be comprised within one entity, but may alternatively also be comprised of distributed functions with one or several base stations.

Advantages of at least some of the embodiments:

Mitigates interference in the neighbouring cells and allows the system to operate with frequency reuse-1, which achieves a more efficient usage of the bandwidth.

Quality targets on the short term, i.e. on the frame level and on the long term, i.e. on the super frame level, can be achieved.

The user bit rate performance requirements are achieved.

The power and channel resources can be used more efficiently.

The optimization scheme is simple in the sense that it makes use of existing measurements.

The scheme is applicable in both uplink and downlink transmission.

**Claims**

1. Method for processing of transmission power level related data in a base station in a distributed architecture, related to a communications system, comprising the steps of:

   - obtaining channel gain data from at least a served first user equipment (step 704),
   - providing performance related data for at least the served first user equipment (step 706),
   - obtaining determined transmission power level data per group of resource blocks, as determined at a first frame level (step 710),
   - providing transmission power related pilot signals to at least the served first user equipment (step 712),
   - obtaining channel quality related information from at least the served first user equipment (step 714), and
   - adapting of a transmission power level per resource block at a second frame level (step 716), comprising altering the determined transmission power level as determined per group of resource blocks at the first frame level, in dependence of the obtained channel quality related information related to at least the served first user equipment and the obtained channel gain data, wherein the first frame level has a slower time scale than the second frame level, **characterized in that** the step of adapting of the transmission power level is further based on rate requirements, corresponding to a number of resource blocks per user.

2. Method for processing of transmission power level related data according to claim 1, where the channel quality related information in the step of obtaining channel quality related information comprises a signal to interference and noise ratio target.

3. Method for processing of transmission power level related data (step 716) according to claim 2, wherein altering the determined transmission power level per resource block at the second frame level comprises decreasing the transmission power level as determined at the first frame level, in dependence of the obtained signal to interference and noise ratio target and the obtained channel gain data, related to at least the served first user equipment.

4. Method for processing of transmission power level related data according to claim 1, wherein altering the determined transmission power level at the second frame level (step 716) comprises increasing the transmission power level at the second frame level from the transmission power level as determined at the first frame level, in dependence of the obtained signal to interference and noise ratio target, whereas maintaining the average transmission power level over all resource blocks used by the served base station equal or below the average transmission power level over all resource blocks as determined at the first frame level.

5. The method for processing transmission power allocation related data according to any one of claims 1-4, wherein the channel gain data in the step of obtaining channel gain data comprises average data over fast fading channel gains.

6. The method for processing transmission power allocation related data according to any one of claims 1-4, further comprising calculating average data over fast fading channel gains from the obtained channel gain data.

7. The method for processing transmission power allocation related data according to any one of claims 1-6, wherein the channel quality information in the step of obtaining channel quality information, comprises substantially instantaneous channel quality related information.

8. The method for processing transmission power allocation related data according to any one of claims 1-7 further comprising:

calculating a residual power for one or more resource blocks assigned for a base station, wherein the residual power is the power associated with a resource block for said base station and which is not used by said base station;
selecting a resource block used by said base station; and
assigning additional power to said resource block, from said residual power.

9. A base station unit (602) for a radio communication in a distributed architecture, arranged to process a transmission power level related data in a base station, wherein the base station unit is configured to:

- obtain channel gain data from at least a served first user equipment,
- provide performance related data for at least the served first user equipment,
- obtain determined transmission power level data per group of resource blocks, as determined at a first frame level,
- provide transmission power related pilot signals to at least the served first user equipment,
- obtain channel quality related information from at least the served first user equipment, and
- adapt a transmission power level per resource block at a second frame level, comprising altering the determined transmission power level as determined per group of resource blocks at the first frame level, in dependence of the obtained channel quality related information related to at least the served first user equipment and the obtained channel gain data, wherein the first frame level has a slower time scale than the second frame level, **characterized in that** the base station unit is configured to adapt the transmission power level further based on rate requirements, corresponding to a number of resource blocks per user.

10. The base station unit (602) according to claim 9, comprising a gain control unit (606) arranged to provide gain data related to at least a first user equipment, and a power allocation unit arranged to allocate transmission power for communication with at least the first user equipment, based on a transmission power level.

11. The base station unit according to claim 9, wherein the transmission power level, comprises at least a long-term transmission power level determined at the first frame level.

12. The base station unit (602) according to claim 10 or 11, wherein the transmission power level comprises a short term transmission power level determined at the second frame level.

13. A base station unit (602) for a radio communication system in a distributed architecture, wherein the base station unit is configured to:

- receive performance related data for at least a first user equipment,
- determine transmission power level data per group of resource blocks at a first frame level,
- provide said transmission power level data to at least one other base station unit, wherein the transmission power level data is adaptable at a second frame level, in dependence of an obtained channel quality related information related to at least the first user equipment and the obtained channel gain data, wherein the first frame level has a slower time scale than the second frame level, **characterized in that** the transmission power level data is adapted based on rate requirements, corresponding to a number of resource blocks per user.

14. Method in a base station in a distributed architecture, the method comprising the steps of:

- receiving performance related data for at least a first user equipment (step 706),
- determining transmission power level data per group of resource blocks, at a first frame level (step 710), based on the received performance related data,
- providing said transmission power level data to at least one other base station unit, wherein the transmission power level data is adaptable at a second frame level, in dependence of an obtained channel quality related information related to at least the first user equipment and the obtained channel gain data, wherein the first frame level has a slower time scale than the second frame level, **characterized in that** the transmission power level data is adapted based on rate requirements, corresponding to a number of resource blocks per user.

15. The method according to claim 14, wherein the performance related data is received over an X2 interface and the transmission power level data is provided over an X2 interface.

**Patentansprüche**

1. Verfahren zum Verarbeiten von übertragungsleistungsstufenbezogenen Daten in einer Basisstation in einer verteilten Architektur in Verbindung mit einem Kommunikationssystem, die folgenden Schritte umfassend:

- Erfassen von Kanalverstärkungsdaten von zumindest einer bedienten ersten Benutzereinrichtung (Schritt 704),
- Bereitstellen von leistungsfähigkeitsbezogenen Daten für zumindest die bediente erste Benutzereinrichtung (Schritt 706),
- Erfassen von bestimmten Übertragungsleistungsstufendaten pro Gruppe von Ressourcenblöcken, so wie auf einer ersten Rahmenstufe bestimmt (Schritt 710),
- Bereitstellen von übertragungsleistungsbezogenen Pilotsignalen an zumindest die bediente erste Benutzereinrichtung (Schritt 712),
- Erfassen von kanalqualitätsbezogenen Informationen von zumindest der bedienten ersten Benutzereinrichtung (Schritt 714), und
- Anpassen einer Übertragungsleistungsstufe pro Ressourcenblock auf einer zweiten Rahmenstufe (Schritt 716), umfassend Ändern der bestimmten Übertragungsleistungsstufe, so wie pro Gruppe von Ressourcenblöcken auf der ersten Rahmenstufe bestimmt, in Abhängigkeit von den erfassten kanalqualitätsbezogenen Informationen in Verbindung mit zumindest der bedienten ersten Benutzereinrichtung und den erfassten Kanalverstärkungsdaten, wobei die erste Rahmenstufe einen langsameren Zeitrahmen als die zweite Rahmenstufe hat, **dadurch gekennzeichnet, dass** der Schritt des Anpassens der Übertragungsleistungsstufe ferner auf Ratenanforderungen entsprechend einer Anzahl von Ressourcenblöcken pro Benutzer basiert.

2. Verfahren zum Verarbeiten von übertragungsleistungsstufenbezogenen Daten nach Anspruch 1, wobei die kanalqualitätsbezogenen Informationen in dem Schritt des Erfassens der kanalqualitätsbezogenen Informationen ein Signal zu Interferenz- und Rauschverhältnisziel umfassen.

3. Verfahren zum Verarbeiten von übertragungsleistungsstufenbezogenen Daten (Schritt 716) nach Anspruch 2, wobei das Ändern der bestimmten Übertragungsleistungsstufe pro Ressourcenblock auf der zweiten Rahmenstufe ein Verringern der Übertragungsleistungsstufe, so wie auf der ersten Rahmenstufe bestimmt, in Abhängigkeit von dem erfassten Signal zu Interferenz- und Rauschverhältnisziel und den erfassten Kanalverstärkungsdaten in Bezug auf zumindest die bediente erste Benutzereinrichtung umfasst.

4. Verfahren zum Verarbeiten von übertragungsleistungsstufenbezogenen Daten nach Anspruch 1, wobei das Ändern der bestimmten Übertragungsleistungsstufe auf der zweiten Rahmenstufe (Schritt 716) ein Erhöhen der Übertragungsleistungsstufe auf der zweiten Rahmenstufe von der Übertragungsleistungsstufe, so wie auf der ersten Rahmenstufe bestimmt, in Abhängigkeit von dem erfassten Signal zu Interferenz- und Rauschverhältnisziel umfasst, wobei die Durchschnittsübertragungsleistungsstufe über alle Ressourcenblöcke, die durch die bediente Basisstation verwendet werden, gleich oder unter der Durchschnittsübertragungsleistungsstufe über alle Ressourcenblöcke, so wie auf der ersten Rahmenstufe bestimmt, gehalten wird.

5. Verfahren zum Verarbeiten von übertragungsleistungszuweisungsbezogenen Daten nach einem der Ansprüche 1-4, wobei die Kanalverstärkungsdaten in dem Schritt des Erfassens von Kanalverstärkungsdaten Durchschnittsdaten über Kanalverstärkungen mit schnellem Fading umfassen.

6. Verfahren zum Verarbeiten von übertragungsleistungszuweisungsbezogenen Daten nach einem der Ansprüche 1-4, ferner umfassend ein Berechnen von Durchschnittsdaten über Kanalverstärkungen mit schnellem Fading aus den erfassten Kanalverstärkungsdaten.

7. Verfahren zum Verarbeiten von übertragungsleistungszuweisungsbezogenen Daten nach einem der Ansprüche 1-6, wobei die Kanalqualitätsinformationen in dem Schritt des Erfassens von Kanalqualitätsinformationen im Wesentlichen verzögerungsfreie kanalqualitätsbezogene Informationen umfassen.

8. Verfahren zum Verarbeiten von übertragungsleistungszuweisungsbezogenen Daten nach einem der Ansprüche 1-7, ferner Folgendes umfassend:

   Berechnen einer Restleistung für einen oder mehrere Ressourcenblöcke, die einer Basisstation zugeordnet sind, wobei die Restleistung die Leistung ist, die mit einem Ressourcenblock für die Basisstation assoziiert ist und die nicht durch die Basisstation verwendet wird;
   Auswählen eines Ressourcenblocks, der durch die Basisstation verwendet wird; und
   Zuordnen von zusätzlicher Leistung zu dem Ressourcenblock aus der Restleistung.

9. Basisstationseinheit (602) für eine Funkkommunikation in einer verteilten Architektur, die dazu angeordnet ist, übertragungsleistungsstufenbezogene Daten in einer Basisstation zu verarbeiten, wobei die Basisstationseinheit für Folgendes ausgelegt ist:

   - Kanalverstärkungsdaten von zumindest einer bedienten ersten Benutzereinrichtung zu erfassen,
   - leistungsfähigkeitsbezogene Daten für zumindest die bediente erste Benutzereinrichtung bereitzustellen,
   - bestimmte Übertragungsleistungsstufendaten pro Gruppe von Ressourcenblöcken, so wie auf einer ersten Rahmenstufe bestimmt, zu erfassen,
   - übertragungsleistungsbezogene Pilotsignale an zumindest die bediente erste Benutzereinrichtung bereitzustellen,
   - kanalqualitätsbezogene Informationen von zumindest der bedienten ersten Benutzereinrichtung zu erfassen, und
   - eine Übertragungsleistungsstufe pro Ressourcenblock auf einer zweiten Rahmenstufe, umfassend Ändern der bestimmten Übertragungsleistungsstufe, so wie pro Gruppe von Ressourcenblöcken auf der ersten Rahmenstufe bestimmt, in Abhängigkeit von den erfassten kanalqualitätsbezogenen Informationen in Verbindung mit zumindest der bedienten ersten Benutzereinrichtung und den erfassten Kanalverstärkungsdaten anzupassen, wobei die erste Rahmenstufe einen langsameren Zeitrahmen als die zweite Rahmenstufe hat, **dadurch gekennzeichnet, dass** die Basisstationseinheit dazu ausgelegt ist, die Übertragungsleistungsstufe ferner basierend auf Ratenanforderungen entsprechend einer Anzahl von Ressourcenblöcken pro Benutzer anzupassen.

10. Basisstationseinheit (602) nach Anspruch 9, umfassend eine Verstärkungssteuerungseinheit (606), die dazu angeordnet ist, Verstärkungsdaten in Bezug auf zumindest eine erste Benutzereinrichtung bereitzustellen, und eine Leistungszuweisungseinheit, die dazu angeordnet ist, Übertragungsleistung für Kommunikation mit zumindest der ersten Benutzereinrichtung zuzuweisen, basierend auf einer Übertragungsleistungsstufe.

11. Basisstationseinheit nach Anspruch 9, wobei die Übertragungsleistungsstufe zumindest eine langfristige Übertragungsleistungsstufe, die auf der ersten Rahmenstufe bestimmt wird, umfasst.

**12.** Basisstationseinheit (602) nach Anspruch 10 oder 11, wobei die Übertragungsleistungsstufe zumindest eine kurzfristige Übertragungsleistungsstufe, die auf der zweiten Rahmenstufe bestimmt wird, umfasst.

**13.** Basisstationseinheit (602) für ein Funkkommunikationssystem in einer verteilten Architektur, wobei die Basisstationseinheit für Folgendes ausgelegt ist:

- leistungsfähigkeitsbezogene Daten für zumindest eine erste Benutzereinrichtung zu empfangen,
- Übertragungsleistungsstufendaten pro Gruppe von Ressourcenblöcken auf einer ersten Rahmenstufe zu bestimmen,
- die Übertragungsleistungsstufendaten an zumindest eine andere Basisstationseinheit bereitzustellen, wobei die Übertragungsleistungsstufendaten auf einer zweiten Rahmenstufe in Abhängigkeit von erfassten kanalqualitätsbezogenen Informationen in Verbindung mit zumindest der ersten Benutzereinrichtung und den erfassten Kanalverstärkungsdaten anpassbar sind, wobei die erste Rahmenstufe einen langsameren Zeitrahmen als die zweite Rahmenstufe hat, **dadurch gekennzeichnet, dass** die Übertragungsleistungsstufendaten basierend auf Ratenanforderungen entsprechend einer Anzahl von Ressourcenblöcken pro Benutzer angepasst sind.

**14.** Verfahren in einer Basisstation in einer verteilten Architektur, wobei das Verfahren die folgenden Schritte umfasst:

- Empfangen von leistungfähigkeitsbezogenen Daten für zumindest eine erste Benutzereinrichtung (Schritt 706),
- Bestimmen von Übertragungsleistungsstufendaten pro Gruppe von Ressourcenblöcken auf einer ersten Rahmenstufe (Schritt 710) basierend auf den empfangenen leistungsfähigkeitsbezogenen Daten,
- Bereitstellen der Übertragungsleistungsstufendaten an zumindest eine andere Basisstationseinheit, wobei die Übertragungsleistungsstufendaten auf einer zweiten Rahmenstufe in Abhängigkeit von erfassten kanalqualitätsbezogenen Informationen in Verbindung mit zumindest der ersten Benutzereinrichtung und den erfassten Kanalverstärkungsdaten anpassbar sind, wobei die erste Rahmenstufe einen langsameren Zeitrahmen als die zweite Rahmenstufe hat, **dadurch gekennzeichnet, dass** die Übertragungsleistungsstufendaten basierend auf Ratenanforderungen entsprechend einer Anzahl von Ressourcenblöcken pro Benutzer angepasst sind.

**15.** Verfahren nach Anspruch 14, wobei die leistungfähigkeitsbezogenen Daten über eine X2-Schnittstelle empfangen werden und die Übertragungsleistungsstufendaten über eine X2-Schnittstelle bereitgestellt werden.

**Revendications**

**1.** Procédé de traitement de données relatives au niveau de puissance de transmission dans une station de base dans une architecture distribuée, relative à un système de communication, comprenant les étapes suivantes :

- l'obtention de données de gain de canal à partir d'au moins un premier équipement utilisateur desservi (étape 704),
- la fourniture de données relatives à la performance pour au moins le premier équipement utilisateur desservi (étape 706),
- l'obtention de données de niveau de puissance de transmission déterminé par groupe de blocs de ressources, tel que déterminé à un premier niveau de trame (étape 710),
- la fourniture de signaux pilotes relatifs à la puissance de transmission à au moins le premier équipement utilisateur desservi (étape 712),
- l'obtention d'informations relatives à la qualité de canal à partir d'au moins le premier équipement utilisateur desservi (étape 714), et
- l'adaptation d'un niveau de puissance de transmission par bloc de ressources à un deuxième niveau de trame (étape 716), comprenant la modification du niveau de puissance de transmission déterminé tel que déterminé par groupe de blocs de ressources au premier niveau de trame, en fonction des informations relatives à la qualité de canal obtenues relatives à au moins le premier équipement utilisateur desservi et des données de gain de canal obtenues, dans lequel le premier niveau de trame à une échelle de temps plus lente que le deuxième niveau de trame, **caractérisé en ce que** l'étape d'adaptation du niveau de puissance de transmission est basée en outre sur des exigences de débit correspondant à un nombre de blocs de ressources par utilisateur.

**2.** Procédé de traitement de données relatives au niveau de puissance de transmission selon la revendication 1, dans lequel les informations relatives à la qualité de canal dans l'étape d'obtention d'informations relatives à la qualité de canal comprend une cible de rapport signal/interférence et bruit.

**3.** Procédé de traitement de données relatives au niveau de puissance de transmission (étape 716) selon la revendication 2, dans lequel la modification du niveau de puissance de transmission déterminé par bloc de ressources au deuxième niveau de trame comprend la diminution du niveau de puissance de transmission tel que déterminé au premier niveau de trame, en fonction de la cible de rapport signal/interférence et bruit obtenue et des données de gain de canal obtenues, relatives à au moins le premier équipement utilisateur desservi.

**4.** Procédé de traitement de données relatives au niveau de puissance de transmission selon la revendication 1, dans lequel la modification du niveau de puissance de transmission déterminé au deuxième niveau de trame (étape 716) comprend l'augmentation du niveau de puissance de transmission au deuxième niveau de trame à partir du niveau de puissance de transmission tel que déterminé au premier niveau de trame, en fonction de la cible de rapport signal/interférence et bruit obtenue, bien qu'en maintenant le niveau de puissance de transmission moyen sur tous les blocs de ressources utilisés par la station de base desservie égal ou inférieur au niveau de puissance de transmission moyen sur tous les blocs de ressources tel que déterminé au premier niveau de trame.

**5.** Procédé de traitement de données relatives au niveau de puissance de transmission selon l'une quelconque des revendications 1 à 4, dans lequel les données de gain de canal dans l'étape d'obtention de données de gain de canal comprennent des données moyennes sur des gains de canal à évanouissement rapide.

**6.** Procédé de traitement de données relatives à l'allocation de puissance de transmission selon l'une quelconque des revendications 1 à 4, comprenant en outre le calcul de données moyennes sur des gains de canal à évanouissement rapide à partir des données de gain de canal obtenues.

**7.** Procédé de traitement de données relatives à l'allocation de puissance de transmission selon l'une quelconque des revendications 1 à 6, dans lequel les informations de qualité de canal dans l'étape d'obtention d'informations de qualité de canal comprennent des informations relatives à la qualité de canal sensiblement instantanées.

**8.** Procédé de traitement de données relatives à l'allocation de puissance de transmission selon l'une quelconque des revendications 1 à 7, comprenant en outre : le calcul d'une puissance résiduelle pour un ou plusieurs blocs de ressources attribués pour une station de base, dans lequel la puissance résiduelle est la puissance associée à un bloc de ressources pour ladite station de base et qui n'est pas utilisée par ladite station de base ; la sélection d'un bloc de ressources utilisé par ladite station de base ; et
l'attribution d'une puissance additionnelle audit bloc de ressource, à partir de ladite puissance résiduelle.

**9.** Unité de station de base (602) pour une communication radio dans une architecture distribuée, agencée pour traiter une donnée relative au niveau de puissance de transmission dans une station de base, dans laquelle l'unité de station de base est configurée pour :

- obtenir des données de gain de canal à partir d'au moins un premier équipement utilisateur desservi,
- fournir des données relatives à la performance pour au moins le premier équipement utilisateur desservi,
- obtenir des données de niveau de puissance de transmission déterminé par groupe de blocs de ressources, tel que déterminé à un premier niveau de trame,
- fournir des signaux pilotes relatifs à la puissance de transmission à au moins le premier équipement utilisateur desservi,
- obtenir des informations relatives à la qualité de canal à partir d'au moins le premier équipement utilisateur desservi, et
- adapter un niveau de puissance de transmission par bloc de ressources à un deuxième niveau de trame, comprenant la modification du niveau de puissance de transmission déterminé tel que déterminé par groupe de blocs de ressources au premier niveau de trame, en fonction des informations relatives à la qualité de canal obtenues relatives à au moins le premier équipement utilisateur desservi et des données de gain de canal obtenues, dans lequel le premier niveau de trame à une échelle de temps plus lente que le deuxième niveau de trame, **caractérisée en ce que** l'unité de station de base est configurée pour adapter le niveau de puissance de transmission est basée en outre sur des exigences de débit correspondant à un nombre de blocs de ressources par utilisateur.

**10.** Unité de station de base (602) selon la revendication 9, comprenant une unité de commande de gain (606) agencée pour fournir des données de gain relatives à au moins un premier équipement utilisateur,
et une unité d'allocation de puissance agencée pour allouer une puissance de transmission pour une communication avec au moins le premier équipement utilisateur, sur la base d'un niveau de puissance de transmission.

**11.** Unité de station de base selon la revendication 9, dans laquelle le niveau de puissance de transmission comprend au moins un niveau de puissance de transmission à long terme déterminé au premier niveau de trame.

**12.** Unité de station de base (602) selon la revendication 10 ou 11, dans laquelle le niveau de puissance de transmission comprend un niveau de puissance de transmission à court terme déterminé au deuxième niveau de trame.

**13.** Unité de station de base (602) pour un système de communication radio dans une architecture distribuée, dans laquelle l'unité de station de base est configurée pour :

- recevoir des données relatives à la performance pour au moins un premier équipement utilisateur,
- déterminer des données de niveau de puissance de transmission par groupe de blocs de ressources à un premier niveau de trame,
- fournir lesdites données de niveau de puissance de transmission à au moins une autre unité de station de base, dans laquelle les données de niveau de puissance de transmission sont adaptables à un deuxième niveau de trame, en fonction d'une information relative à la qualité de canal obtenue relatives à au moins le premier équipement utilisateur et des données de gain de canal obtenues, dans laquelle le premier niveau de trame a une échelle de temps plus lente que le deuxième niveau de trame, **caractérisée en ce que** les données de niveau de puissance de transmission sont adaptées sur la base d'exigences de débit, correspondant à un nombre de blocs de ressources par utilisateur.

**14.** Procédé dans une station de base dans une architecture distribuée, le procédé comprenant les étapes suivantes :

- la réception de données relatives à la performance pour au moins un premier équipement utilisateur (étape 706),
- la détermination de données de niveau de puissance de transmission par groupe de blocs de ressources, à un premier niveau de trame (étape 710), sur la base des données relatives à la performance reçues,
- la fourniture desdites données de niveau de puissance de transmission à au moins une autre unité de station de base, dans laquelle les données de niveau de puissance de transmission sont adaptables à un deuxième niveau de trame, en fonction d'une information relative à la qualité de canal obtenue relative à au moins le premier équipement utilisateur et des données de gain de canal obtenues, dans lequel le premier niveau de trame a une échelle de temps plus lente que le deuxième niveau de trame, **caractérisé en ce que** les données de niveau de puissance de transmission sont adaptées sur la base d'exigences de débit, correspondant à un nombre de blocs de ressources par utilisateur.

**15.** Procédé selon la revendication 14, dans lequel les données relatives à la performance sont reçues sur une interface X2 et les données de niveau de puissance de transmission sont fournies sur une interface X2.

UE                                                          BS

Pilot signals (transmitted regularly)                          102

Instantaneous gain report (e.g. CQI, CSI)                      104

DL scheduling: data transmission                               106

Instantaneous gain report (e.g. CQI, CSI)                      108

DL scheduling: data transmission                               110

PRIOR ART

Fig. 1

P

1   2   3   4   5          N-1  N  f(RB)

▬▬  RNC power allocation

Fig. 3

Fig. 2

— RNC power allocation

.... BS power allocation

Fig. 4

— RNC power allocation

.... BS power allocation

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006286995 A

### Non-patent literature cited in the description

- **H. J. SU ; E. GERANIOTIS.** A Distributed Power Allocation Algorithm with Adaptive Modulation for Multi-Cell OFDM Systems. *IEEE International Symposium on Spread Spectrum Techniques and Applications,* 1998
- **S. KIANI ; D. GESBERT ; J. E. KIRKEBØ ; A. GJENDEMSJØ ; G. E. ØIEN.** A Simple Greedy Scheme for Multicell Capacity Maximization. *International Telecommunications Symposium,* 2006
- **G. LI ; H. LIU.** Downlink radio resource allocation for multi-cell OFDMA system. *IEEE Transactions on wireless communications,* December 2006, vol. 5 (12

- 3rd Generation Partnership Project (3GPP); Technical Specification Group (TSG) Radio Access Network (RAN); Working Group 1 (WG1). *Physical layer procedures (FDD),* 28 June 1999, 1-30
- Inter-Cell Interference Coordination Techniques for Multi-Cell OFDMA Networks Supporting Narrow Band and Elastic Services. **KOUTSIMANIS, C.** MASTER OF SCIENCE THESIS. ROYAL INSTITUTE OF TECHNOLOGY (KTH), May 2007, 1-85